# EUROPEAN PATENT APPLICATION

(11) **EP 2 275 499 A2**
(43) Date of publication of application: **19.01.2011**
(21) Application number: 10163851.8
(22) Date of filing: 29.10.2008
(51) Int. Cl.: C09D 5/18

(54) **Polymer-based fire-retarding formulations**

(30) Priority: 01.11.2007 US 996110 P; 16.01.2008 US 6500 P
(62) Divisional of application: 08843690.2
(71) Applicant: E.M.A.T. Technologies Ltd., 34483 Haifa (IL)
(72) Inventor: Edry, Eyal, 34987, Haifa (IL); Lerner, Felix, 21771, Karmiel (IL)
(74) Representative: Jennings, Tara Romaine

(57) **Abstract**

The invention provides a formulation for rendering surfaces fireproof by application thereon.

## Description

### FIELD OF THE INVENTION

This invention relates generally to fire-retarding polymer-based formulations and uses thereof in a variety of applications.

### BACKGROUND OF THE INVENTION

With the recent increase in the trade of electronic circuits, electronic appliances and equipment and a vast number of other costly and highly sensitive electronic devices and systems, requiring specialty coating and protection, the need for protection against fire hazards has dramatically increased. The incorporation of fire-retarding materials in the packaging material during material processing has proved expensive. At times, such inclusion of additives has also required processing modifications which greatly affected the final characteristics of the product.

International publication no. WO 03/066766 discloses a flame retardant foamed article comprising a polymeric foam material having a polymer, antimony-free fire retardant and a plurality of microspheres.

US Patent No. 7,033,526 discloses a composition which retards the spread of fire, protects assets at risk from fire damage and emits a material which aids in extinguishing the fire. The composition may be either in the form of a gel, which contains urea or a urea derivative that retains water and releases CO₂ upon heating.

### SUMMARY OF THE INVENTION

With the great structural and material variety of foam and packaging materials for electronic devices and other articles, it has been desirable to provide a generic, cheap and effective fire retarding formulation for use in forming a fireproof coating which would be useful for coating such great variety of packaging materials, padding materials, filling materials and other surfaces and materials.

The inventors of the present invention have now developed a fire-retarding formulation which removes the need to alter existing production lines for packaging products and materials and can be employed on existing and new packaging products alike.

The formulation of the invention is also more efficient than existing fire-retarding formulations suitable for polyethylene and polyurethane foam materials, not only in terms of its components but also in terms of the ability to regulate the coating flexibility by adding a plasticizer with flame retardant properties. The formulation additionally has adhesion to the polymer which is significantly better than that of, e.g., a latex-based system.

Thus, in one aspect of the present invention, there is provided a flame-retarding coating formulation comprising at least one polymer resin and a flame-retarding mixture, said mixture comprising at least one flame-retarding agent and at least one flame-retarding plasticizer.

The formulation is defined as being **"*fire-retarding*"** for having the ability to, when applied to a surface of a combustible material, reduce or eliminate the tendency of the surface of the material and thereafter the material itself to ignite when exposed to heat or flame.

The polymer resin employed in the formulation of the invention is a resin of a polymer typically defined as an elastomer and/or as a plastic. Such resins are selected from rubber such as natural rubber, isoprene rubber, styrene-butadiene rubber, polychloroprene rubber, butadiene-acrylonitrile copolymers, butyl rubber, ethylene copolymers and terpolymers, propylene copolymers and terpolymers, acrylate copolymers and terpolymers, chlorinated, sulfonated and chlorosulfonated polymers; elastomeric epoxy resins; elastomeric polyurethane resins; acrylic resins, copolymers and terpolymers of acrylic resins; vinyl resins such as polyvinyl acetals, polyvinyl acetals copolymers and terpolymers, polyvinyl chloride (PVC), polyvinyl chloride copolymers and terpolymers; polyvinyl acetate, polyvinyl acetate copolymers and tertpolymers; polyvinyl alcohol, polyvinyl alcohol copolymers and terpolymers; and polyvinylidene chloride, polyvinylidene chloride copolymers and terpolymers.

In one embodiment, the polymer resin is of an elastomer. In another embodiment, the polymer resin is of plastic. In another embodiment, the polymer resin is a mixture of different resins.

The resins may be commercially available or synthetically prepared in accordance with methods known in the art. Depending on the commercial grade, method of preparation, degree of purity and other variable parameters, the resins may be pure resins or in the form of a formulation containing one or more of them or a mixture containing thereof. A person skilled in the art would be able to distinguish between varying purities and/or mixtures and have the tools of the art to provide a polymer resin suitable for specific application. The polymer resins employed may be of any molecular weight.

In some embodiments, the resin is PVC resin. The PVC resin disclosed herein may be selected amongst homopolymer PVC, copolymer PVC, and a combination thereof. The properties of the PVC resin, as generally stated above, may vary depending, e.g., on the polymerization method and temperature employed during synthesis. Typically, the higher the polymerization temperature, the lower the molecular weight of the homopolymer PVC resin produced. The resin may be of any molecular weight.

Typical PVC resins have an average molecular weight in the range of about 20,000 to about 100,000 Daltons and a Fikentscher K- value ranging from about 41 to about 98. Certain PVC resins show optimum physical properties and process performance for particular applications. Depending on the polymerization method and manufacturing conditions, the PVC resin may vary in resin particle size and porosity.

In some embodiments, the PVC resin employed has a K- value of between 41 and 58.

In some other embodiments, the PVC resin is a PVC copolymer.

In some further embodiments, the PVC copolymer has a K-value of between 41 and 58.

In still further embodiments, the PVC copolymer has a vinyl chloride content of between 80 and 95%.

As stated above, the formulation of the invention comprises at least one polymer resin and a flame-retarding mixture comprising at least one flame-retarding agent and at least one flame-retarding plasticizer. Unlike known flame-retarding formulations that have traditionally used a single or a combination of flame-retarding materials, the flame-retarding mixture employed in the formulation, e.g., PVC formulation, of the invention, comprises also a flame-retarding plasticizer that not only assists in rendering the coating better fireproofing abilities but also physical characteristics that enable its generic use in a great variety of applications and on a great variety of surfaces.

The at least one flame-retarding agent is typically one or more flame-retarding material and smoke suppressor, selected in a non-limiting fashion from Sb₂O₃, Sb₂O₅, sodium antimonate, melamine cyanurate, bromine-based flame-retarding agents, metal hydroxides (such as aluminum hydroxide and magnesium hydroxide), molybdenum-based compounds (such as molybdenum oxide, ammonium molybdate and zinc molybdate) and zinc-based compounds (such as zinc borate, zinc oxide).

In some embodiments, the at least one flame-retarding agent is a single agent selected from the above.

In other embodiments, the at least one flame-retarding agent is a combination of at least two such agents. A combination of two or more such agents may be of different agents, or of agents of the same group. In some embodiments, the at least one flame-retarding agent is a combination of Sb₂O₃ and Sb₂O₅. In other embodiments, the at least one flame-retarding agent is a combination of two bromine-based flame-retarding agents. In further embodiments, the at least one flame-retarding agent is a combination of at least one bromine-based flame-retarding agent and at least one metal hydroxide.

The at least one bromine-based flame-retarding agent is at least one such agent selected from brominated epoxy polymers, ammonium bromide, 1,2,5,6,9,10-hexabromocyclododecane, decabromodiphenyl oxide, tetrabromobisphenol A and derivates thereof, and tris (tribromoneopentyl) phosphate.

The flame-retarding plasticizer is selected to impart to the polymer coating both flame-retarding capabilities and workability and other related characteristics such as flexibility, deformability, distencibility and others. Non-limiting examples of the flame-retarding plasticizer are 2-ethylhehyl diphenyl phosphate, isodecyl diphenyl phosphate, triaryl phosphates and their blend, trialkyl phosphates and their blend, tricresyl phosphate and trixylenyl phosphate.

Additional non-limiting examples of plasticizers which may be used in accordance with the present invention are dialkyl phthalates (such as dimethyl, dibutyl, dioctyl, diiso-octyl, didecyl), alcohol derivates of phthalates (such as butyl-benzyl phthalates), dialkyl adipates (such as dimethyl, dibutyl, dioctyl, didecyl adipate), and dialkyl azelates (such as dioctyl azelate), and epoxy plasticizers (such as epoxidized vegetable oils, epoxidized alkyl ester and bis-epoxides).

The mixture of the at least one flame-retarding agent and at least one flame-retarding plasticizer may be of any two agents as defined above, combined at any ratio (w/w, w/v, v/v, % ratio). In some embodiments, the flame-retarding mixture is a 1:1, 1:2, 1:3, 1:10, 1:100, 2:1, 3:1, 10:1, 100:1 mixture or any other mixture of at least one flame-retarding agent and at least one flame-retarding plasticizer, respectively. In some embodiments, the ratio between the at least one flame-retarding agent and the at least one flame-retarding plasticizer is between 1:1 and 100:1, or between 1:1 and 1:100, respectively.

In some embodiments, the at least one flame-retarding agent is at least two flame-retarding agents- each being in equal amounts, the at least one flame-retarding plasticizer is one flame-retarding plasticizer, the ratio between the at least two flame-retarding agents, combined, and the one flame retarding plasticizer may be between 1:1 and 100:1 1 or between 1:1 and 1:100, respectively.

Typically, the flame-retarding formulation of the invention is a ketone solution comprising the polymer resin and the fire-retarding mixture as detailed. The ketone solvent may be of a linear, branched, cyclic, macrocyclic, complexed or additionally substituted organic compound, having at least one ketone group. Non-limiting ketone solvents are methyl ethyl ketone (MEK), methyl iso-butyl ketone (MIBK), dimethyl ketone (acetone), and diethyl ketone (DEK).

The ketone solvent employed in the formulation is an organic compound being a liquid at the temperature at which the dissolution of the polymer resin is carried out. In some embodiments, the ketone solvent is a liquid at room temperature.

The solution may be of a single ketone solvent or any combination of ketone solvents, at any ratio. For example, the formulation may comprise MEK and MIBK at any such ratio as 1:100,1:2,1:1,1:0.5,1: 0.01 and the like. In cases where two or more ketone solvents are employed, they may be added together or sequentially into the reaction mixture in order to impart the solution the desired physical attributes needed for the dissolution of the resin or for the specific target application.

In some embodiments, the ketone solvent is of a single ketone solvent.

In other embodiments, the ketone solvent is a mixture of at least two such solvents.

In further embodiments, the ketone solvent is a part of solvent system containing at least one second solvent selected from acetate esters such as butyl acetate methyl acetate, ethyl acetate, a diacetone alcohol, and an aromatic solvent such as toluene and xylene.

In some embodiments, the solvent used for the PVC formulations of the present invention is a solvent system of at least one ketone solvent and at least one second solvent.

The formulation of the invention may comprise at least one additional additive selected from, in a non-limiting fashion, an antistatic agent, a heat stabilizer, a pigment, a filler, a coupling agent, an adhesion promoter, a non-flame-retarding plasticizer, a smoke suppressor, a UV stabilizer, a biocide, an antifoaming agent, a dispersing agent, and an anti-settling agent.

The flame-retarding formulation of the invention may be prepared and stored in a ready-for-use form for long periods of time, e.g., a few years. The application of the formulation onto the surface to be coated may be carried out by one or more of brushing, spraying, dipping, and soaking.

As stated above, the flame-retarding formulation may be applied to any surface or part thereof. In some embodiments, the surface is a packaging material such as paper of any type and composition, paperboard of any type and composition, and synthetic polymers derived from crude oil of any composition.

In some embodiments, the surface is that of a foam material. Within the context of the present invention, the term **"*foam material*"** is meant to include foamed natural rubber, foamed synthetic rubber of synthetic plastics in an elastomeric-foamed form, e.g., foamed polyethylene, PVC, and various other plastic materials. In some embodiments, the polymer resin employed in the formulation of the invention is the same as the material from which the foam is made. In some other embodiments, the polymer resin is different from the foam material.

The foam material may be a structure of any shape, volume, color, density, homogeneity, porosity, flexibility, and surface characteristics (e.g., smooth or coarse).

In some embodiments, the foam material is in the form of molded foam such as blocks, sheets, cushions, mattresses, and packaging foams structured based on the device/article to be packaged.

In other embodiments, the foam is slabstock foam.

The foam may be any foam used for example in the furniture industry, automotive industry, carpeting (particularly as carpet backings), sound insulating and in packaging of any article, device, structure, electronic appliance, household appliance, medical devices, etc.

In some embodiments, the foam is a foam component of a protective covering, which protects an article from damage during shipping and handling by acting as an insulating shock absorber.

The polymer coating, e.g., PVC coating, obtained by applying the formulation of the invention, on a surface of an article, is fireproof. Within the context of the present invention **"*fireproof*"** or any lingual variation thereof or any lingual alternative thereto refers to the coating, also referred, interchangeably, herein to as a film or a layer, as being both self-extinguishing and non-burning. In other words, the polymer coating will burn only as long as an external source of fire is provided. Once the source of fire is removed, the coating will not continue to burn and will not be re-ignited even upon reintroduction of the same or different source of fire.

In another aspect, the invention provides the use of the coating formulation of the invention in forming a flame-retarding foam material. The foam material, as an example to other surfaces, is coated with a layer or film of polymer having flame-retarding characteristics.

A person skilled in the art should appreciate that the thickness of the polymer coating, may be predetermined based on the specific surface and other performance characteristics in view of which thicker or less thick films may be desired. As various surfaces may have different characteristics such as absorbance and resistivity to coatings, in order to achieve a desired film thickness, multicotaings may be required. Generally and without being limited thereto, the thicker the surface (foam, paperboard, etc.), the thicker is the coating required in order to provide better flame retardancy.

In some embodiments, the polymer film is between 10 and 200micron thick. In other embodiments, the polymer film is between 50 and 150 micron thick. In further embodiments, the polymer film is between 75 and 150 micron thick.

In another aspect of the invention, there is provided the use of the polymer formulation of the invention in forming a flame-retarding packaging material.

In another aspect of the invention, there is provided a composite fireproof foam material comprising a foam structure and a polymer coating over at least a part of the surface of said structure, said coating comprising at least one polymer and a flame-retarding mixture of at least one flame-retarding agent and at least one flame-retarding plasticizer.

In some embodiments, said coating comprising at least one polymer and a flame-retarding mixture of at least one flame-retarding agent, at least one flame-retarding plasticizer and at least one bromine-based flame retarding agent, as defined hereinabove.

In other embodiments, said coating comprising at least one polymer and a flame-retarding mixture of at least two flame-retarding agents and a flame-retarding.

Within the context of the present invention, the terms **"*film*"** and **"*coating*",** used interchangeably, refer to the layer of at least one polymer applied onto at least a part of the surface of an article. As stated herein, and as will be further exemplified, the film or coating obtained by applying the formulation of the invention onto said surface is characterized as being fireproof. As a person skilled in the art would recognize, there are several flammability tests which can be used to classify the performance of the foam or packaging material coated with the polymer film of the invention. Such classification is dependent upon the application, the industry, and local-government or international regulations.

Where foam is concerned, a foam article can be rated for fire retardancy based on its flammability performance for any of the following properties: burn rate, burn length, self-extinguish time, burning drips, surface flammability, optical smoke generation, and analysis of type and concentration of toxic combustion gases. A fire retardant foam article can be classified as fire retardant by the following tests: UL 94, F. A. R. 25.853 12 and 60 second Vertical Burn tests, ASTM E162, and ASTM E662, and BSS 7239. There are sometimes different fire retardant ratings for some tests based on flammability performance (i.e., for the UL 94 test, there are V-0, V-1, and V-2 ratings).

The fire-retardancy of non-foam packaging materials according to the invention may be similarly rated.

As will be demonstrated and exemplified below, the fire-retardancy of the PVC coating on foam was rated as having V-0 flammability (as compared to V-2 flammability of the uncoated foam material) in accordance with the UL-04 flammability test.

In yet another aspect of the invention there is provided a kit comprising the formulation of the invention in a ready-for-use form and instructions for use.

The kit may also contain a container for stirring the formulation prior to use and an applicator. In some additional embodiments, the kit may comprise in a separate container a dye concentrate to be added prior to use. In other embodiments, the kit may comprise in one or more separate containers at least one additive to be selectively added by the end user prior to use.

### DETAILED DESCRIPTION OF EMBODIMENTS

The preparation of a formulation according to the invention was exemplified by employing PVC as one polymer amongst others having the suitable characteristics. A person skilled in the art would realize that the PVC may be replaced, *mutatis mutandis*, by any one of the other polymer resins disclosed hereinabove. Thus, the use of PVC should be regarded as a non-limiting enabling example for the successful execution of the present invention.

A formulation according to the invention may be prepared as disclosed herein with respect to PVC and the following general preparation procedure.

Into a stainless steel tank equipped with dissolver type agitator, a thermometer, and a powder feeding equipment the solvent(s), plasticizer(s), organic soluble flame-retardant(s), antistatic agent(s), antifoam agent(s), and/or UV and heat stabilizer(s) were added. A PVC copolymer was fed while stirring. After completed dissolution of PVC copolymer, the flame-retardant agent(s) and other additive(s), filler(s), pigment(s), inorganic flame and smoke retardant(s), and/or dispersing agent(s) were added. The formulation thus obtained was stirred continuously until a homogeneous distribution of all ingredients resulted. At this stage, the formulation was transferred to a colloid mill in order to reduce the particle size of the inorganic components.

The fineness of the formulation was tested to measure how small the inorganic particles have been ground up or dispersed in the process. The fineness test was performed on a Hegman Fineness Gauge, and is related in units of Hegman. For a flat formulation, the fineness range should be of 4-5 Hegman units. For a high gloss formulation, the fineness range should be of 7-9 Hegman units.

For the formulation of the invention, the Hegman fineness was measured after grinding (according to ASTM D-1210) and was found within the range of 0-10 microns.

An anti-settling agent was added under stirring after the grinding was completed.

An exemplary formulation prepared in accordance with the above is provided in Table 1.

**Table 1: A flame-retarding PVC formulation according to the invention**

| **Ingredient of the formulation** | | **%** |
|---|---|---|
| MIBK | Solvent | 46.12 |
| Butyl acetate | Solvent | 16.91 |
| 2-Ethylhexyl diphenyl phosphate | Flame retardant plasticizer | 3.88 |
| Di-2-ethylhexyl phtalate | Plasticizer | 0.58 |
| Antimony trioxide | Inorganic flame retardant | 2.00 |
| Magnesium hydroxide | Smoke suppressor | 1.54 |
| DECA | Bromine-based flame retardant | 4.92 |
| UM-50 | PVC copolymer | 22.00 |
| Baerostab MSQ/N | Heat stabilizer | 0.31 |
| Tinuvin P | UV stabilizer | 0.15 |
| BYK - 66N | Antifoaming agent | 0.43 |
| Talc | Filler | 0.61 |
| Bayer 920 | Pigment | 0.31 |
| Disperbyk 115 | Dispersing agent | 0.08 |
| BYK - 410 | Anti-settling agent | 0.15 |
| | | |
| **Total solids, %** | | 36.97 |
| **Total** | | 100.00 |

In **Table 1: MIBK-** methyl isobutyl ketone; **DECA -** decabromodiphenyl oxide; **UM-50-** PVC-vinyl acetate copolymer manufactured by Wuxi Honghui Chemical Co., Ltd; **Baerostab MSQ/N-** liquid butyl tin carboxylate; **Tinuvin P-** 2-(2'-Hydroxy-5'-methylphenyl)benzotriazole; **BYK-66N-** an antifoam agent manufactured by BYC Chemie; **Bayer 920-** a yellow pigment manufactured by Bayer; **Disperbyk 115-** a dispersing agent manufactured by BYC Chemie; **BYK-410-** anti-settling agent added to avoid or reduce filler and pigment settling manufactured by BYC Chemie.

In order to obtain a desired viscosity, the formulation may be further diluted with the ketone solvent or solvent system employed.

The formulation may be applied, e.g., by brushing or spraying, onto the surface of, e.g., a foam article or a packaging material. The formulation may be applied numerous times so as to obtain a coating of a desired thickness. Upon application, the coated surface is allowed to dry. Application of the formulation exemplified in Table 1 afforded a dry film of about 100 microns in thickness.

The flammability of the coated surfaces was examined in comparison to uncoated surfaces of the same material and characteristics.

There are 12 flame classifications specified in UL-94 that are assigned to materials based on the results of small-scale flame tests. These classifications are used to distinguish the burning characteristics of a material, e.g., foam, after test specimens have been exposed to a specified test flame under controlled conditions. Six of the classifications relate to materials commonly used in manufacturing enclosures, structural parts and insulators found in consumer electronic products (5VA, 5VB, V-0, V-1, V-2, HB). These include the foam and packaging materials employed by the invention. Three of the remaining six classifications relate to low-density foam materials commonly used in fabricating speaker grills and sound-deadening material (HF-1, HF-2, HBF). The last three classifications are assigned to very thin films, generally not capable of supporting themselves in a horizontal position (VTM-0, VTM-1, VTM-2). These are usually assigned to substrates on flexible printed circuit boards.

In the testing process, coated specimens and uncoated control specimens are oriented in either a horizontal or vertical position, depending on the specifications of the relevant test method, and are subjected to a defined flame ignition source for a specified period of time. In some tests, the test flame is only applied once, as is the case of the horizontal burning (HB) test, while in other tests the flame is applied twice or more. A HB flame rating indicates that the material was tested in a horizontal position and found to burn at a rate less than a specified maximum.

The three vertical ratings, V-2, V-1 and V-0 indicate that the material was tested in a vertical position and self-extinguished within a specified time after the ignition source was removed. The vertical ratings also indicate whether the test specimen dripped flaming particles that ignited a cotton indicator located below the sample.

UL-94 also describes a method in which the test flame is applied for up to five applications, in testing for a 5VA or 5VB classification. These small-scale tests measure the propensity of a material to extinguish or spread flames once it becomes ignited.

Polyethylene foam sticks 15x15x200 mm in size were coated with a flame-retarding formulation of the invention such as that of Table 1. Film thickness on the foam after solvent evaporation was 100 microns. Flame retardancy of both coated and uncoated foam samples was evaluated in accordance with the above described UL-94 flammability test protocol. All coated specimens exhibited V-0 flammability as compared with a V-2 flammability of uncoated specimens. This clearly is a testimony to the fireproof characteristic of the PVC coating of the invention.

### Features

**1.** A flame-retarding coating formulation comprising at least one polymer resin and a flame-retarding mixture, said mixture comprising at least one flame-retarding agent and at least one flame-retarding plasticizer.
**2.** The formulation according to feature 1, wherein said at least one polymer resin is selected from rubber, an elastomeric epoxy resin, an elastomeric polyurethane resin, an acrylic resin, a copolymer and terpolymer of acrylic resin, and a vinyl resin.
**3.** The formulation according to feature 2, wherein said rubber is selected from natural rubber, isoprene rubber, styrene-butadiene rubber, polychloroprene rubber, butadiene-acrylonitrile copolymers, butyl rubber, ethylene copolymers and terpolymers, propylene copolymers and terpolymers, acrylate copolymers and terpolymers, chlorinated, sulfonated and chlorosulfonated polymers.
**4.** The formulation according to feature 2, wherein said vinyl resin is selected from polyvinyl acetal, polyvinyl acetal copolymer and terpolymer, polyvinyl chloride (PVC), polyvinyl chloride copolymer and terpolymer, polyvinyl acetate, polyvinyl acetate copolymer and terpolymer, polyvinyl alcohol, polyvinyl alcohol copolymer and terpolymer, polyvinylidene chloride, polyvinylidene chloride copolymer and terpolymer.
**5.** The formulation according to feature 4, wherein said vinyl resin is PVC, being selected from PVC homopolymer, PVC copolymer, and a combination thereof.
**6.** The formulation according to feature 5, wherein said PVC resin is PVC copolymer.
**7.** The formulation according to any one of features 4 to 6, wherein said PVC resin has an average molecular weight in the range of about 20,000 to about 100,000 Daltons.
**8.** The formulation according to any one of features 4 to 7, wherein said PVC resin has a Fikentscher K-value ranging from about 41 to about 58.
**9.** The formulation according to any one of features 4 to 8, wherein said PVC resin has a vinyl chloride content of between 80 and 95%.
**10.** The formulation according to feature 1, wherein said at least one flame-retarding agent is selected from Sb₂O₃, Sb₂O₅, sodium antimonate, melamine cyanurate, a bromine-based flame-retarding agent, a metal hydroxide, a molybdenum-based compound and a zinc-based compound.
**11.** The formulation according to feature 10, wherein said at least one flame-retarding agent is a single agent.
**12.** The formulation according to feature 10, wherein said at least one flame-retarding agent is at least two flame-retarding agents.
**13.** The formulation according to feature 10, wherein said bromine-based flame-retarding agent is at least one agent selected from brominated epoxy polymers, ammonium bromide, 1,2,5,6,9,10-hexabromocyclododecane, decabromodiphenyl oxide, tetrabromobisphenol A and derivates thereof, and tris (tribromoneopentyl) phosphate.
**14.** The formulation according to feature 1, wherein said at least one flame-retarding plasticizer is selected from 2-ethylhehyl diphenyl phosphate, isodecyl diphenyl phosphate, a triaryl phosphate and blends thereof, a trialkyl phosphate and blends thereof, tricresyl phosphate and trixylenyl phosphate.
**15.** The formulation according to feature 1, being a ketone solution.
**16.** The formulation according to feature 15, wherein said ketone is selected from methyl ethyl ketone (MEK), methyl iso-butyl ketone (MIBK), dimethyl ketone (acetone), diethyl ketone (DEK) and mixtures thereof.
17. The formulation according to feature 1, comprising at least one second solvent.
**18.** The formulation according to feature 1, comprising at least one additive selected from an antistatic agent, a heat stabilizer, a pigment, a filler, a coupling agent, an adhesion promoter, a non-flame-retarding plasticizer, a smoke suppressor, a UV stabilizer, a biocide, an antifoaming agent, a dispersing agent, and an anti-settling agent.
**19.** A method for rendering an article fireproof, said method comprising applying onto at least a portion of the surface of said article a formulation according to any one of features 1 to 18 and allowing said formulation to dry on said surface.
**20.** The method according to feature 19, wherein said application is by brushing, spraying, dipping, or soaking.
**21.** The method according to feature 19, wherein said article is a packaging material.
**22.** The method according to feature 21, wherein said packaging material is selected from paper, paperboard, and a synthetic polymer derived from crude oil.
**23.** The method according to feature 21, wherein said packaging material is foam.
**24.** The method according to feature 23, wherein said foam is in the form of a block, a sheet, a cushion, a mattress, a packaging foam structure and a slabstock foam.
**25.** A packaging material coated on at least a part of the surface thereof with a coating of a formulation of any one of features 1 to 18.
**26.** A packaging material coated according to the method of any one of features 19 to 24.
**27.** The packaging material according to feature 25 or 26, being foam material.
**28.** The packaging according to any one of features 25 to 27 being fireproof.
**29.** The packaging material according to any one of features 25 to 28 having V-0 flammability in accordance with the UL-04 flammability test.
**30.** A packaging material coated with a PVC film having V-0 flammability in accordance with the UL-04 flammability test.
**31.** The packaging material according to feature 30, being foam material.
**32.** A composite fireproof foam material comprising a foam structure and a polymer coating over at least a part of the surface of said structure, said polymer coating comprising at least one polymer and a flame-retarding mixture, said mixture comprising at least one flame-retarding agent and at least one flame-retarding plasticizer.
**33.** The composite according to feature 32, wherein said polymer is PVC.

It will be apparent that the invention can be carried into practice with many modifications, variations and adaptations, and with the use of numerous equivalents or alternative solutions that are within the scope of persons skilled in the art, without exceeding the scope of the features.

## Claims

1. A flame-retarding coating formulation comprising at least one polymer resin and a flame-retarding mixture, said mixture comprising at least one flame-retarding agent and at least one flame-retarding plasticizer.

2. The formulation according to claim 1, wherein said at least one polymer resin is a vinyl resin.

3. The formulation according to claim 2, wherein said vinyl resin is selected from polyvinyl acetal, polyvinyl acetal copolymer and terpolymer, polyvinyl chloride (PVC), polyvinyl chloride copolymer and terpolymer, polyvinyl acetate, polyvinyl acetate copolymer and terpolymer, polyvinyl alcohol, polyvinyl alcohol copolymer and terpolymer, polyvinylidene chloride, polyvinylidene chloride copolymer and terpolymer.

4. The formulation according to claim 3, wherein said vinyl resin is PVC, being selected from PVC homopolymer, PVC copolymer, and a combination thereof.

5. The formulation according to any one of claims 3 or 4, wherein said PVC resin has an average molecular weight in the range of about 20,000 to about 100,000 Daltons.

6. The formulation according to any one of claims 3 to 5, wherein said PVC resin has a Fikentscher K-value ranging from about 41 to about 58.

7. The formulation according to claim 1, wherein said at least one flame-retarding agent is selected from Sb₂O₃, Sb₂O₅, sodium antimonate, melamine cyanurate, a bromine-based flame-retarding agent, a metal hydroxide, a molybdenum-based compound and a zinc-based compound.

8. The formulation according to claim 7, wherein said bromine-based flame-retarding agent is at least one agent selected from brominated epoxy polymers, ammonium bromide, 1,2,5,6,9,10-hexabromocyclododecane, decabromodiphenyl oxide, tetrabromobisphenol A and derivates thereof, and tris (tribromoneopentyl) phosphate.

9. The formulation according to claim 1, wherein said at least one flame-retarding plasticizer is selected from 2-ethylhehyl diphenyl phosphate, isodecyl diphenyl phosphate, a triaryl phosphate and blends thereof, a trialkyl phosphate and blends thereof, tricresyl phosphate and trixylenyl phosphate.

10. The formulation according to claim 1, being a ketone solution, wherein said ketone is selected from methyl ethyl ketone (MEK), methyl iso-butyl ketone (MIBK), dimethyl ketone (acetone), diethyl ketone (DEK) and mixtures thereof.

11. A method for rendering an article fireproof, said method comprising applying onto at least a portion of the surface of said article a formulation according to any one of claims 1 to 10 and allowing said formulation to dry on said surface.

12. The method according to claim 11, wherein said article is a packaging material selected from paper, paperboard, and a synthetic polymer derived from crude oil.

13. The method according to claim 12, wherein said packaging material is foam.

14. A packaging material coated on at least a part of the surface thereof with a coating of a formulation of any one of claims 1 to 10.

15. The packaging material according to claim 14, being foam material having V-0 flammability in accordance with the UL-04 flammability test.
